(19) Europäisches Patentamt
European Patent Office
Office européen des brevets

(11) Veröffentlichungsnummer : **0 015 593**
**B2**

# (12) NEUE EUROPÄISCHE PATENTSCHRIFT

(45) Veröffentlichungstag der neuen Patentschrift : **06.05.87**

(51) Int. Cl.[4] : **C 08 G 18/67**, C 07 C125/073, C 08 G 18/24, C 08 G 18/75

(21) Anmeldenummer : **80200106.5**

(22) Anmeldetag : **08.02.80**

## (54) Verfahren zur Herstellung lagerungsstabiler Urethanacryle.

(30) Priorität : **12.02.79 DE 2905205**

(43) Veröffentlichungstag der Anmeldung : **17.09.80 Patentblatt 80/19**

(45) Bekanntmachung des Hinweises auf die Patenterteilung : **25.05.83 Patentblatt 83/21**

(45) Bekanntmachung des Hinweises auf die Entscheidung über den Einspruch : **06.05.87 Patentblatt 87/19**

(84) Benannte Vertragsstaaten : **BE CH DE FR GB IT LU NL SE**

(56) Entgegenhaltungen :
DE-A- 1 667 054
DE-A- 2 325 825
DE-A- 2 535 503
DE-A- 2 539 448
DE-A- 2 830 369
DE-B- 1 644 797
US-A- 4 078 015
US-A- 4 107 229
US-A- 4 133 723

(73) Patentinhaber : **HÜLS AKTIENGESELLSCHAFT**
**Patentabteilung / PB 15 - Postfach 13 20**
**D-4370 Marl 1 (DE)**

(72) Erfinder : **Disteldorf, Josef, Dr.**
**Am Sengenhoff 2a**
**D-4690 Herne 1 (DE)**
Erfinder : **Schnurbusch, Horst, Dr.**
**Overwegstrasse 36**
**D-4690 Herne 1 (DE)**
Erfinder : **Flakus, Werner, Dr.**
**Dürer Strasse 23**
**D-4350 Recklinghausen (DE)**

(74) Vertreter : **Steil, Hanna, Dipl.-Chem. et al**
**RSP PATENTE - PB 15 Postfach 1320**
**D-4370 Marl 1 (DE)**

EP 0 015 593 B2

**Beschreibung**

Leistungsfähige durch UV-Strahlung härtbare ungesättigte Harze, z. B. Urethanacryle, können z. B. durch Umsetzung von Polyolen mit Isocyanaten unter Einbau ungesättigter, z. B. olefinischer Endgruppen hergestellt werden. Dergleichen Produkte sind unter Zusatz von z. B. aromatischen Ketonen und ihren Derivaten, sogenannten Photoinitiatoren, mittels UV-Strahlung einer Wellenlänge von 200-400 nm je nach Schichtdicke in Zeiten von 0,1-10 Sekunden zu trockenen Kunststoffilmen härtbar.

Die Eigenschaften der Endprodukte resultieren in an sich bekannter Weise aus strukturell abstimmbaren Paarungen von Polyolkomponenten mit den entsprechenden Isocyanaten und den verwendeten Olefinstrukturen.· Zur Herstellung lichtstabiler Endprodukte hoher Ansprüche ist die Verwendung aliphatischer Isocyanate erforderlich.

Als besonders leistungsfähig hinsichtlich der Licht-, Wärme- und Oxidationsbeständigkeit erweisen sich vorteilhaft Kombinationen von Polyolen, vornehmlich von Oxyestern, mit sterisch gehinderten cycloaliphatischen Diisocyanaten, deren Addukten und Derivaten, besonders auf der Basis von Isophorondiisocyanat (IPDI) gemäß nachstehendem Formelbild :

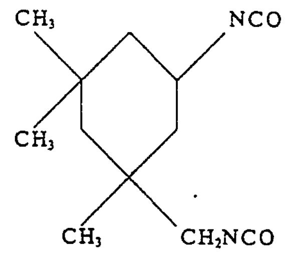

3-Isocyanatomethyl-3,5,5-trimethyl-cyclohexylisocyanat (I)

Zur Herstellung von UV-härtbaren Acrylurethanharzen gelingt es relativ problemlos, bifunktionelle Polyole mit Diisocyanaten und olefinischen Reaktanten zu mäßig viskosen, lagerstabilen Acrylurethanen umzusetzen. Dabei wird zu einem geeigneten reaktiven Verdünnungsmittel, das bereits die Diisocyanatkomponente mit oder ohne Katalysator enthält, zunächst das bifunktionelle Polyolzugetropft, nach einigen Stunden der NCO-Gehalt ermittelt und danach Hydroxyalkylacrylat mit oder ohne Katalystor zur Herstellung eines weitgehend NCO-freien Urethanacrylharzes zugefügt.

Es ist aber nach Eigenschaftsbild und Leistungsvermögen erstrebenswert, auch tri- und tetrafunktionelle Polyole einzusetzen.

Es bereitet aber nach der bekannten Fahrweise erhebliche Schwierigkeiten, die Paarung polyfunktioneller, d. h. tri- und tetrafunktioneller Oxyester mit IPDI oder anderen Diisocyanaten und olefinischen Reaktanten auszuführen, da hochviskose Produkte von sehr geringer Lagerstabilität gebildet werden. Des weiteren ist die Lagerstabilität solcher Harze bei Anwesenheit von enolisierbaren aromatischen Aktivatoren beeinträchtigt.

Gefordert werden aber viskositätsmäßig beherrschbare Harze guter Lagerstabilität. Zwar gelingt es, auf bekannte Weise lagerstabile trifunktionelle Oxyesterumsetzungsprodukte mit z. B. IPDI herzustellen, die aber nach der Acrylierung hochviskose Endprodukte mangelhafter Haltbarkeit liefern. Noch größere Schwierigkeiten bereitet es, lagerstabile tetrafunktionelle Urethanacrylharze herzustellen, die sehr hochwertige Strukturelemente innerhalb der UV-härtbaren Harze vorstellen.

Es wurde nun überraschenderweise gefunden, daß es möglich ist, durch bestimmte Maßnahmen dergleichen Harze mit erheblich verminderter Viskositätslage sowie mindestens 2 Jahre langer Lagerstabilität bei Umsetzung tri- und tetrafunktioneller Polyole herzustellen. Dies gilt auch für die kombinierte Anwendung mit bifunktionellen Polyolen.

Gegenstand der Erfindung ist daher ein Verfahren zur Herstellung lagerungsstabiler Urethanacryle aus Isophorondiisocyanat, Hydroxyalkylacrylaten und bi-, tri- und/oder tetrafunktionellen gesättigten und/oder ungesättigten Polyolen in Gegenwart von reaktiven Verdünnern in zwei Stufen, das dadurch gekennzeichnet ist, daß in der ersten Stufe das Isophorondiisocyanat mit Hydroxyalkylacrylaten im Äquivalentverhältnis NCO : OH von 2 : 1 im Temperaturbereich von 20-25 °C mit organischen Zinnkatalysatoren mit 0,002 Gewichtsprozent Zinn umgesetzt wird und in der zweiten Stufe die Umsetzung des in der ersten Stufe gebildeten NCO-haltigen Acrylurethans mit mehrfunktionellen Polyolen oder deren Mischungen im Äquivalentverhältnis NCO : OH von 1 : 1 bei Temperaturen von 70 °C mit organischen Zinnkatalysatoren mit 0,02 Gewichtsprozent Zinn zu praktisch NCO-freien Urethanacrylen erfolgt.

Nach der erfindungsgemäßen Arbeitsweise gelingt es in der ersten Reaktionsstufe, ein bemerkenswert selektiv umgesetztes Präpolymer zu erhalten, das nahezu frei von oligomeren Reaktionsprodukten anfällt (Monomerengehalt < 0,5 %). Weicht man von diesen Reaktionsbedingungen ab, werden dagegen Reaktionsgemische mit beträchtlichem Oligomerenanteil und nicht umgesetztem Diisocyanat erhalten, wobei letztere bei der späteren Oxyesterumsetzung zu unmittelbaren Gelierungen des Harzes oder sehr hohen Viskositäten mit mangelhafter Lagerstabilität führen.

Das so erfindungsgemäß in der ersten Reaktionsstufe hergestellte NCO-endständige Acrylurethan kann praktisch als definiert monofunktionelles NCO-Präpolymer betrachtet werden, das nunmehr selektiv in der zweiten Reaktionsstufe bei der Umsetzung mit Polyolen hoher Funktionalität (tri- und tetrafunktionell) definierte Acrylurethanderivate liefert.

Im ersten Reaktionsschritt wird also nahezu ausschließlich ein Monoacrylderivat des IPDI (III) gebildet, z. B. bei der Umsetzung mit Hydroxyalkylacrylat (II).

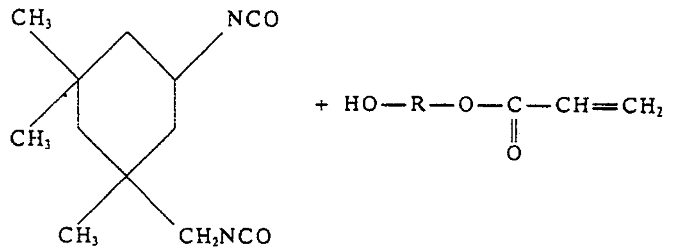

(I) (II)

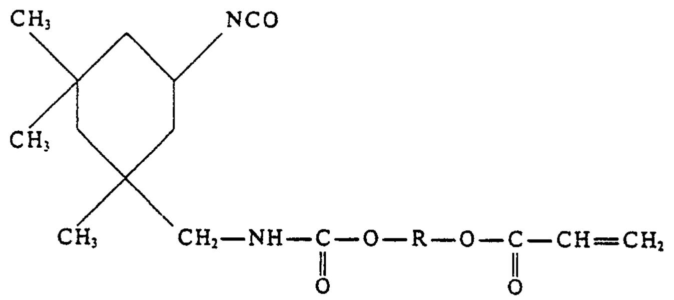

(III)

Die Ausbildung di-acrylierter Urethane (Oligomerprodukt) und der Verbleib von nicht umgesetztem monomerem Diisocyanat (IPDI) wird dabei praktisch eliminiert (Monomerenanalyse). Im Falle des Verbleibs von monomerem IPDI würde die spätere Umsetzung mit tri- und tetrafunktionellen Oxyestern zur Vorvernetzung und Gelierung der Harze führen, mindestens aber zu hochviskosen instabilen Verbindungen sehr befristeter Lagerstabilität.

Die selektive Bildung des Monoacrylderivates von IPDI (Verbindung III) tritt nur bei erfindungsgemäßem Arbeiten ein, wobei die unterschiedliche Reaktivität der beiden NCO-Gruppen des IPDI-Moleküls eine Unterstützung dieser Selektivität der Reaktion gewährleisten. Die unterschiedliche Reaktivität der beiden NCO-Gruppen am IPDI-Molekül wird dagegen weitgehend nivelliert, wenn im ersten Schritt die Umsetzung von IPDI nach dem Stand der Technik mit polyfunktionellen Polyolen vorgenommen wird, wie Vergleichsversuche zeigen. Auch wird die unterschiedliche Reaktivität der beiden NCO-Funktionen des IPDI nivelliert, wenn die Umsetzung derselben mit Hydroxyalkylacrylat bei höherer Temperatur als beansprucht und/oder höherer Katalysatorkonzentration ausgeführt wird.

Wird abweichend von der Erfindung verfahren, d. h. bei höherer Temperatur und/oder höherer katalytischer Aktivierung und in anderer Reihenfolge, ist die Viskosität der anfallenden Produkte extrem hoch und die Lagerstabilität der Reaktionsprodukte in höchstem Maße unbefriedigend.

Die selektive Ausbildung der Verbindung III bildet die Voraussetzung, die weitere Umsetzung hochfunktioneller Polyole zu NCO-freien Urethanacrylen durchzuführen. Insofern führte unter diesen Voraussetzungen der zweite Reaktionsschritt die Umsetzung der Monoisocyanato-urethanacryle mit beliebigen hochfunktionellen Polyolen zu sehr definierten reproduzierbaren Polyurethanpolyacrylaten, die nachfolgend und in den Beispielen nach Eigenschaften und Leistungsfähigkeit beschrieben werden.

Die erfindungsgemäß hergestellten tri- und tetrafunktionellen Acrylurethane zeichnen sich durch nachstehende Prädikate aus :

1. Bezüglich der Viskosität und Lagerstabilität gut handhabbare und langlebige Produkte, die frei von Gelanteilen sind und mit einer Vielzahl olefinischer Produkte des Marktes verträglich, abmischbar und frei von monomeren Anteilen an Hydroxyalkylacrylat sind.

2. UV-reaktive Produkte, die mechanisch und chemisch außerordentlich resistente Beschichtungen für eine Vielzahl von Substraten liefern und ihre Eigenschaftsmerkmale weitgehend der hohen Funktionalität der zu ihrer Herstellung verwendeten Polyole verdanken.

3. Licht-, thermo- und oxidationsbeständige Filme von geringem Abrieb und hoher Wetterbeständigkeit, die eine gute Haftung auf einer Vielzahl von Substraten aufweisen und relativ unempfindlich gegen Überbrennungen sind.

4. Die erfindungsgemäß hergestellten Acrylurethane zeichnen sich weiterhin aus durch eine hohe

Verträglichkeit gegenüber reaktiven Verdünnern — die bei vielen Handelsprodukten erheblich limitiert ist —, ferner durch ein ausgezeichnetes Lösungsvermögen gegenüber zahlreichen Photoinitiatoren.

5. Die erfindungsgemäß hergestellten Acrylurethane können sowohl als hot melts oder in Abmischung mit — vorteilhafterweise wenig flüchtigen — reaktiven Verdünnern zur Beschichtung einer Vielzahl von Substraten verwendet werden, wie z. B. für Kunststoffe, Metalle, Holz, Preßspan, Glas, Leder, Beton, ebenso wie für Verpackungswerkstoffe oder zur Herstellung auch glasfaserverstärkter Gießharze und für sonstige Applikationen.

Die Herstellung lagerstabiler Urethanacrylate tri- und tetrafunktioneller Struktur ist nach dem erfindungsgemäßen Verfahren in hoher Selektivität nur mit IPDI oder analog strukturierten Polyisocyanaten ausführbar, die reaktiv unterschiedliche NCO-Gruppen aufweisen.

Die erfindungsgemäß praktizierten Verfahrensschritte erlauben es, Triole aller Art, so auch Oxyesterprodukte, die durch Umsetzung von Triolen, Dicarbonsäuren und Diolen oder von Triolen und Lactonen in bekannter Weise hergestellt werden können, mit IPDI-Monoacrylat zu leistungsfähigen lagerstabilen UV-reaktiven Harzen umzusetzen. Darüber hinaus können aber auch Reaktanten tetrafunktioneller Struktur, wie Umsetzungsprodukte von Triolen mit Dicarbonsäuren (Molverhältnis 2 : 1), z. B. Trimethylolpropan/Adipinsäure, der Urethanisierung und Acrylierung unter Ausbildung leistungsfähiger UV-Harze überstellt werden. Die monomeren und polymeren Polyole sind dem Fachmann so bekannt, daß sie nicht näher beschrieben werden müssen.

Beispiele für Hydroxyalkylacrylate, d. h. ungesättigte additionspolymerisierbare monomere organische Verbindungen mit einer einzigen mit Isocyanat reaktiven aktiven Wasserstoffgruppe sind 2-Hydroxyäthylacrylat, 2-Hydroxyäthylmethacrylat, 2-Hydroxyäthylmethacrylat, 2-Hydroxypropylacrylat, 2-Hydroxypropylmethacrylat, N-Hydroxymethylacrylamid, N-Hydroxymethylmethacrylamid, Diäthylenglykolmonoacrylat, Diäthylenglykolmonomethacrylat, Glycerindimethacrylat, Trimethylolpropandimethacrylat und dergleichen.

Als organische Zinnverbindung findet insbesondere Dibutylzinndilaurat (DBTL) Verwendung, aber auch Dibutylzinnacetat oder-versat, Zinnoctoat usw.

Unerachtet der Möglichkeit der Verwendung der erfindungsgemäß hergestellten Urethanacrylharze als hot melts ist ihre Herstellung auch in Form bei Raumtemperatur flüssiger Einstellungen von technischem Nutzen. Mit Hilfe reaktiver Verdünner, zweckmäßig solcher geringer Flüchtigkeit, können aufgrund des erfindungsgemäßen Herstellungsverfahrens unbegrenzt Verdünnungen der selektiv hergestellten Urethanacryle vollzogen werden, auch solche, die bei Raumtemperatur gesprüht, gegossen, gerakelt oder getaucht werden.

Als reaktive Verdünner können verwendet werden: Vinylacetat, Diallylphthalat, Diallylmaleat, Vinylpyrrolidon, 2-Äthylhexylacrylat, Hexandioldiacrylat und eine Vielzahl anderer olefinischer niedrig viskoser Reaktanten, deren strukturelle Einflußnahme bei der Härtung der UV-Harze anteilmäßig zu berücksichtigen ist.

Die Härtung der erfindungsgemäß hergestellten Harze kann z. B. mit Hg-Dampflampen (Hoch- und Mitteldruck) im Wellenlängenbereich von 150-400 nm erfolgen. Im allgemeinen ist die Verwendung von Photoinitiatoren zweckmäßig. Mehr als 100 photochemisch wirksame Aktivatoren sind z. Z. beschrieben. Ihre Wirksamkeit und Verträglichkeit, ihr mengenmäßiger Bedarf und ihre technische Zugänglichkeit ist sehr unterschiedlich. Viele Photoinitiatoren beeinträchtigen die Farbzahl des Harzes, die Farbzahl des Films und auch die Dunkellagerstabilität von Harzen.

Die Härtung der Harze kann mit unterschiedlichen Wattleistungen erfolgen. Bei extrem dünnen Schichten ($< 5\ \mu m$) sind $< 80$ Watt/cm zulässig, bei Schichtdicken von 40-100 µm sind 80-120 Watt/cm vorteilhaft. Bei höheren Schichtdicken von 200 µm und mehr kann es zweckmäßig sein, Bestrahlungsaggregate von $> 120$ Watt/cm je nach Substrat und Arbeitsweise zu verwenden.

Je nach Leistung der Lampe und Schichtdicke des Harzes werden Bruchteile oder Vielfache von Sekunden Härtungszeit benötigt, um eine ausreichende Filmhärtung zu erreichen.

## Vergleichsbeispiel

Urethanacrylharz, hergestellt durch Umsetzung von gesättigten Polyolen mit IPDI und nachfolgender Acrylierung mit 2-Hydroxyäthylacrylat, im einzelnen:

611 g 2-Äthylhexylacrylat und 635 g IPDI (2,86 Mol) werden vorgelegt, in diese Lösung werden 835 g Oxyester der Basis Phthalsäure, Adipinsäure, Hexandiol-1,6, Trimethylolpropan (3 : 3 : 6 : 2 Mol) (OH-Zahl 190 mg KOH/g Substanz), 0,2 g DBTL bei 50 °C unter Rühren zugetropft, nach 2 weiteren Stunden wird der NCO-Gehalt zu 5,8 Gewichtsprozent, der Monomerengehalt zu 4,5 % IPDI ermittelt. Sodann werden bei 70 °C 2,2 g DBTL und 365 g 2-Hydroxyäthylacrylat in das Reaktionsgut zugetropft, nach 24 Stunden Nachreaktion erhält man ein weitgehend NCO-freies Urethanacrylharz, NCO-Gehalt: 0,29 Gewichtsprozent.

| | |
|---|---|
| Stoffdaten, Harz | |
| Viskosität 20 °C | 93 000 cSt = 930 $cm^2/s$ |
| Viskosität 50 °C | 4 400 cSt = 44 $cm^2/s$ |

Lack- und Folienergebnisse Urethanacrylharz

Nach Härtung mit UV-Strahlung 80 Watt/cm in 4 Sekunden, Photoinitiator Irgacure 651 (Ciba-Geigy) :

| | |
|---|---|
| Pendelhärte König (Sekunden) | 45 |
| Härte Buchholz | 61 |
| Erichsentiefung (mm) | 8,5 |
| Folienergebnisse | |
| Schichtdicke (μm) | 70 |
| Bruchspannung ($N/mm^2$) | 18,0 ± 3 |
| Bruchdehnung (%) | 42 ± 4 |
| Lagerstabilität des Harzes bei 25 °C | 2 Monate |
| Dunkellagerstabilität bei 60 °C | 5 Tage |

Beispiel 1

Urethanacrylharz, hergestellt durch Acrylierung von IPDI mit Hydroxyäthylacrylat und nachfolgende Umsetzung desselben mit gesättigten Polyolen zu weitgehend NCO-freien Urethanacrylen :

Eine Mischung von 0,16 g Dibutylzinndilaurat (DBTL) (~ 0,002 % Sn), 611 g 2-Äthylhexylacrylat und 635 g IPDI (2,86 Mol) wird vorgelegt, und in diese Lösung werden 365 g 2-Hydroxyäthylacrylat, technische Qualität, unter Rühren zugetropft und bei 20-25 °C zur Umsetzung gebracht, bis der NCO-Gehalt der Lösung 7,4 Gewichtsprozent erreicht, d. h. nach 5-6 Stunden unter diesen Bedingungen. Sodann werden in diese Reaktionslösung 2,3 g Dibutylzinndilaurat und 835 g Oxyester der Basis Phthalsäure, Adipinsäure, Hexandiol-1,6, Trimethylolpropan (3 : 3 : 6 : 2 Mol), OH-Zahl 190 mg KOH/g Substanz bei 70 °C eingetropft. Nach 8-10 Stunden Reaktionszeit erhält man ein weitgehend NCO-freies Urethanacrylharz, NCO-Gehalt < 0,3 Gewichtsprozent.

Die analog ermittelten Stoffdaten des Harzes einschließlich der Lack und Folienbefunde nach der UV-Härtung sind wie folgt ermittelt und dem Vergleichsbeispiel gegenüberzustellen :

| | |
|---|---|
| Stoffdaten, Harz, Beispiel 1 | |
| Viskosität 20 °C | 35 400 cSt = 354 $cm^2/s$ |
| Viskosität 50 °C | 1 950 cSt = 19,5 $cm^2/s$ |
| Lackfilm und Folien nach UV-Härtung | |
| Pendelhärte König (Sekunden) | 50 |
| Härte Buchholz | 65 |
| Erichsentiefung (mm) | 9,5 |
| Schichtdicke (μm) | 83 |
| Bruchspannung ($N/mm^2$) | 26,0 ± 4 |
| Bruchdehnung (%) | 70 ± 3 |
| Lagerstabilität des Harzes bei 25 °C | > 18 Monate |
| Dunkellagerstabilität bei 60 °C | > 60 Tage |

Beispiel 2

Urethanacrylharz, hergestellt in Analogie zu Beispiel 1, jedoch nach Ausbildung des Monoacrylurethanisocyanats durch weitere Umsetzung desselben mit 309,9 g eines tetrafunktionellen Polyols der Basis Trimethylolpropan/Adipinsäure (im Molverhältnis 2 : 1), OH-Zahl 512 mg KOH/g Substanz.

561,3 g 2-Äthylhexylacrylat
635 g IPDI
365 g 2-Hydroxyäthylacrylat
0,15 g DBTL
309.9 g Polyol der Basis Trimethylolpropan/Adipinsäure — OH-Zahl 512
1.5 g DBTL

| | |
|---|---|
| Stoffdaten, Harz, Beispiel 2 | |
| Viskosität 20 °C | 98 600 cSt = 986 $cm^2/s$ |
| Viskosität 50 °C | 2 540 cSt = 25,4 $cm^2/s$ |
| Lackfilm- und Foliendaten nach UV-Härtung | |
| Pendelhärte König (Sekunden) | 151 |

| | |
|---|---|
| Härte Buchholz | 111 |
| Erichsentiefung (mm) | 3,3 |
| Schichtdicke (μm) | 66 |
| Bruchspannung ($N/mm^2$) | 54 ± 6 |
| Bruchdehnung (%) | 6 ± 1 |
| Lagerstabilität des Harzes bei 25 °C | > 12 Monate |
| Dunkellagerstabilität bei 60 °C | > 60 Tage |

Beispiel 3

Urethanacrylat, hergestellt in Analogie zu Beispiel 1, jedoch nach Ausbildung des Monoacrylurethanisocyanats durch weitere Umsetzung desselben mit einem Polycaprolacton der OH-Zahl 310 mg KOH/g.

0,15 g DBTL
503,9 g 2-Äthylhexylacrylat
635 g IPDI
365 g 2-Hydroxyäthylacrylat

511,8 g Polycaprolacton OH-Zahl 310
1,85 g DBTL

| | |
|---|---|
| Stoffdaten, Harz, Beispiel 3 | |
| Viskosität 20 °C | 47 000 cSt = 470 $cm^2/s$ |
| Viskosität 50 °C | 2 500 cSt = 25 $cm^2/s$ |
| Lackfilm- und Foliendaten nach UV-Härtung | |
| Pendelhärte König (Sekunden) | 90 |
| Härte Buchholz | 100 |
| Erichsentiefung (mm) | 10,6 |
| Schichtdicke (μm) | 80 |
| Bruchspannung ($N/mm^2$) | 25,6 ± 1,6 |
| Bruchdehnung (%) | 17 ± 6 |
| Lagerstabilität des Harzes bei 25 °C | > 9 Monate |
| Dunkellagerstabilität bei 60 °C | > 20 Tage |

Beispiel 4

Urethanacrylharz, hergestellt in Analogie zu Beispiel 1, jedoch nach Ausbildung des Monoacrylurethanisocyanats durch weitere Umsetzung desselben mit einem bifunktionellen Polyol der Basis Phthalsäure, Neopentylglykol, Hexandiol-1,6 im Molverhältnis 4 : 2,5 : 2, OH-Zahl 85 mg KOH/g.

955 g 2-Äthylhexylacrylat
635 g IPDI
365 g 2-Hydroxyäthylacrylat
0,2 g DBTL

1 866 g Oxyester der Basis Phthalsäure, Neopentylglykol, Hexandiol-1,6(4 : 2,5 : 2,5)
3,6 g DBTL

| | |
|---|---|
| Stoffdaten, Harz, Beispiel 4 | |
| Viskosität 20 °C | 40 000 cSt = 400 $cm^2/s$ |
| Viskosität 50 °C | 2 100 cSt = 21 $cm^2/s$ |
| Lackfilm- und Foliendaten nach UV-Härtung | |
| Pendelhärte König (Sekunden) | 29 |
| Härte Buchholz | 48 |
| Erichsentiefung (mm) | 10,7 |
| Schichtdicke (μm) | 70 |
| Bruchspannung ($N/mm^2$) | 10,3 ± 1,3 |
| Bruchdehnung (%) | 100 ± 7 |
| Lagerstabilität des Harzes bei 25 °C | > 7 Monate |
| Dunkellagerstabilität bei 60 °C | 15 Tage |

Beispiel 5

80 Teile Harz, Beispiel 1
20 Teile eines Harzes, das in Analogie zu Beispiel 1 im einzelnen wie folgt hergestellt wurde :

| | | |
|---|---|---|
| 635 | g | IPDI |
| 365 | g | 2-Hydroxyäthylacrylat |
| 563 | g | 2-Äthylhexylacrylat |
| 0,15 | g | DBTL |
| 314 | g | Oxyester, Basis Phthalsäure-Trimethylolpropan (1 : 2), OH-Zahl 505 mg KOH/g |
| 1,5 | g | DBTL |

| | |
|---|---|
| Stoffdaten, Harz, Beispiel 5 | |
| Viskosität 20 °C | 39 600 cSt = 396 $cm^2/s$ |
| Viskosität 50 °C | 2 300 cSt = 23 $cm^2/s$ |

| | |
|---|---|
| Lackfilm- und Foliendaten nach UV-Härtung | |
| Pendelhärte König (Sekunden) | 105 |
| Härte Buchholz | 100 |
| Erichsentiefung (mm) | 7,0 |
| Schichtdicke (μm) | 74 |
| Bruchspannung ($N/mm^2$) | 32,3 ± 1,6 |
| Bruchdehnung (%) | 14 ± 3 |
| | |
| Lagerstabilität des Harzes bei 25 °C | > 12 Monate |
| Dunkellagerstabilität bei 60 °C | 60 Tage |

**Patentanspruch**

Verfahren zur Herstellung lagerungsstabiler Urethanacryle aus Isophorondiisocyanat, Hydroxyalkylacrylaten und bi-, tri- und/oder tetrafunktionellen gesättigten und/oder ungesättigten Polyolen in Gegenwart von reaktiven Verdünnern in zwei Stufen, dadurch gekennzeichnet, daß in der ersten Stufe das Isophorondiisocyanat mit Hydroxyalkylacrylaten im Äquivalentverhältnis NCO : OH von 2 : 1 im Temperaturbereich von 20-25 °C mit organischen Zinnkatalysatoren mit 0,002 Gewichtsprozent Zinn umgesetzt wird und in der zweiten Stufe die Umsetzung des in der ersten Stufe gebildeten NCO-haltigen Acrylurethans mit mehrfunktionellen Polyolen oder deren Mischungen im Äquivalentverhältnis NCO :OH von 1 :1 bei Temperaturen von 70 °C mit organischen Zinnkatalysatoren mit 0,02 Gewichtsprozent Zinn zu praktisch NCO-freien Urethanacrylen erfolgt.

**Claim**

Process for the preparation of storage-stable urethane-acrylics from isophorone diisocyanate, hydroxyalkyl acrylates and bi-, tri- and/or tetra-functional saturated and/or unsaturated polyols in the presence of reactive diluents in two stages, characterized in that, in the first stage, isophorone diisocyanate is reacted with hydroxyalkyl acrylates in an NCO : OH equivalent ratio of 2 : 1 in the temperature range from 20 to 25 °C with organic tin catalysts with 0.002 per cent by weight of tin and, in the second stage, the reaction of the NCO-containing acrylylurethane formed in the first stage with polyfunctional polyols or mixtures thereof is carried out in an NCO : OH equivalent ratio of 1 : 1 at temperatures of 70 °C with organic tin catalysts with 0.02 per cent by weight of tin, to give virtually NCO-free urethane-acrylics.

**Revendication**

Procédé de fabrication d'uréthane-acryles stables au stockage, à partir de diisocyanate d'isophoron, d'acrylates d'hydroxyalcoyle et polyols bi-, tri-, et/ou tétra-fonctionnels, saturés et/ou non saturés, en présence de diluants réactifs, en deux étapes, procédé caractérisé en ce que, dans la première étape, on fait réagir le diisocyanate d'isophoron avec les acrylates d'hydroxyalcoyle dans le rapport d'équivalence NCO : OH de 2 : 1, dans un intervalle de température de 20 à 25 °C avec des catalyseurs à base d'étain organiques, à raison de 0,002 % en poids d'étain, et en ce que, dans la seconde étape, la réaction de l'acryluréthane renfermant du NCO, qui a été formé dans la première étape, avec les polyols polyfonctionnels ou leurs mélanges, s'opère dans le rapport d'équivalence NCO : OH de 1 : 1, à une température de 70 °C avec des catalyseurs à base d'étain, organiques avec 0,02 % en poids d'étain, pour obtenir des uréthaneacryles pratiquement exempts de NCO.